# EUROPEAN PATENT SPECIFICATION

(11) **EP 3 922 889 B1**
(45) Date of publication and mention of the grant of the patent: **23.10.2024**
(21) Application number: 19914596.2
(22) Date of filing: 20.12.2019
(51) Int. Cl.: F16K 5/06

(54) **FLOW PATH SWITCH VALVE**
STRÖMUNGSWEGUMSCHALTVENTIL
SOUPAPE DE COMMUTATION DE TRAJET D'ÉCOULEMENT

(30) Priority: 05.02.2019 JP 2019019063
(43) Date of publication of application: 15.12.2021
(73) Proprietor: Fujikoki Corporation, Tokyo 158-0082 (JP)
(72) Inventor: KONDO, Daisuke, Tokyo 158-0082 (JP); MOCHIZUKI, Kenichi, Tokyo 158-0082 (JP); MATSUMOTO, Takayuki, Tokyo 158-0082 (JP); TAKAHASHI, Koji, Kariya- city, Aichi 448-8661 (JP)
(74) Representative: Ter Meer Steinmeister & Partner
(86) International application number: PCT/JP2019/050052
(87) International publication number: WO 2020/162061

(56) References cited:
- CN-A- 105 422 918
- CN-U- 207 762 322
- CN-Y- 2 682 258
- JP-A- 2018 115 690
- JP-A- H03 157 571
- JP-B1- S4 638 473
- US-A- 4 175 580
- US-A1- 2001 032 957

## Description

### Technical Field

The present invention relates to a flow channel switching valve that switches between connections of flow channels by rotating a valve member.

### Background Art

An example of an existing flow channel switching valve is disclosed in Patent Literature 1. The flow channel switching valve includes a valve body that has a valve chamber, a valve member that is disposed in the valve chamber, a valve shaft that is connected to the valve member, and a rotational driving section that includes, for example, a drive gear and a motor that rotationally drives the valve member via the valve shaft. Further prior art is described in Patent Literature 2 to 8.

The valve member of the flow channel switching valve has a hexagonal vertical through hole. The valve shaft having a hexagonal cross-section is inserted into an upper portion of the vertical through hole. As a result, the valve member is connected to the valve shaft. Rotation of the valve shaft makes the valve member rotating. In addition, the valve member has a circular transverse hole that is selectively communicated with two outflow ports formed in the valve body.

### Citation List

### Patent Literature

Patent Literature 1: Japanese Unexamined Patent Application Publication No. 2018-115690
Patent Literature 2: Chinese Patent Application Publication No. CN 105 422 918 A
Patent Literature 3: Chinese Registered Utility Model Application No. CN 207 762 322 U
Patent Literature 4: Chinese Registered Utility Model Application No. CN 2 682 258 Y
Patent Literature 5: Japanese Unexamined Patent Application Publication No. JP H03 157571 A
Patent Literature 6: United States Patent Application Publication No. US 2001/032957 A1
Patent Literature 7: United States Patent Application Publication No. US 4 175 5.80 A
Patent Literature 8: Japanese Examined Patent Application Publication No. JP S46 38473 B1

### Summary of Invention

### Technical Problem

However, in the valve member of the flow channel switching valve described above, since a corner portion of the hexagonal vertical through hole is disposed in a beam part between the vertical through hole and the transverse hole, the beam part has a thinner shape. Thus, in manufacturing the valve member by injection molding, resin flows may meet in the beam part. This may generate a weld line and decrease the rigidity of the beam part.

In view of this, it is an object of the present invention to provide a flow channel switching valve that can effectively suppress decreasing the rigidity of a beam part of a valve member.

### Solution to Problem

To achieve the object described above, a flow channel switching valve of the present invention is defined in appended claim 1 and includes a valve body that has a valve chamber and flow channels in communication with the valve chamber, a valve member that is rotatably installed in the valve chamber and that switches between connections of the flow channels depending on a rotational position of the valve member, a valve shaft that is mounted in the valve member along a rotational axis of the valve member, and a driving section that rotates the valve member via the valve shaft. The valve member has a transverse hole in communication with a switching flow channel formed in the valve member, and a vertical hole in which the valve shaft is inserted. When viewed in the direction of the rotational axis, the vertical hole has an outward convex corner portion, and the corner portion is shifted from a beam part between the transverse hole and the vertical hole.

In the present invention, the vertical hole is in communication with the switching flow channel.

In the present invention, the vertical hole has a polygonal shape.

In the present invention, when viewed in the direction of the rotational axis, the transverse hole is formed such that a center line of the transverse hole is perpendicular to a side portion of the polygonal shape.

In the present invention, the vertical hole preferably has a polygonal shape with corner portions in multiples of three or four.

In the present invention, the vertical hole preferably has a quadrangular shape.

In the present invention, the vertical hole preferably has a triangular shape.

In the present invention, the valve member is resin-molded in a spherical shape and has a gate mark only on an outer surface of a wall portion that faces the vertical hole.

### Advantageous Effects of Invention

According to the present invention, the valve member in which the valve shaft is mounted has the transverse hole in communication with the switching flow channel formed in the valve member, and the vertical hole in which the valve shaft is inserted. When viewed in the direction of the rotational axis of the valve member, the vertical hole has the outward convex corner portion, and the corner portion is shifted from the beam part between the transverse hole and the vertical hole. In this way, it is possible to avoid the beam part of the valve member having a thinner shape and effectively suppress decreasing the rigidity of the beam part of the valve member. Due to the vertical hole in which the valve shaft is inserted has a polygonal shape such as a triangular shape, a quadrangular shape, a hexagonal shape, or an octagonal shape, the valve member has a relatively simple structure and can be easily manufactured.

### Brief Description of Drawings

[Fig. 1] Fig. 1 is a perspective view containing a cross-section of a flow channel switching valve according to an embodiment of the present invention.
[Fig. 2] Fig. 2 is a cross-sectional view taken along line A-A in Fig. 1.
[Fig. 3] Fig. 3 is a perspective view of a ball valve member and a valve shaft that the flow channel switching valve in Fig. 1 includes.
[Fig. 4] Fig. 4 is a plan view of the ball valve member.
[Fig. 5] Figs. 5 are plan views illustrating modifications of the ball valve member, wherein figures 5(a) and 5(b) show examples not forming part of the claimed invention.

### Description of Embodiments

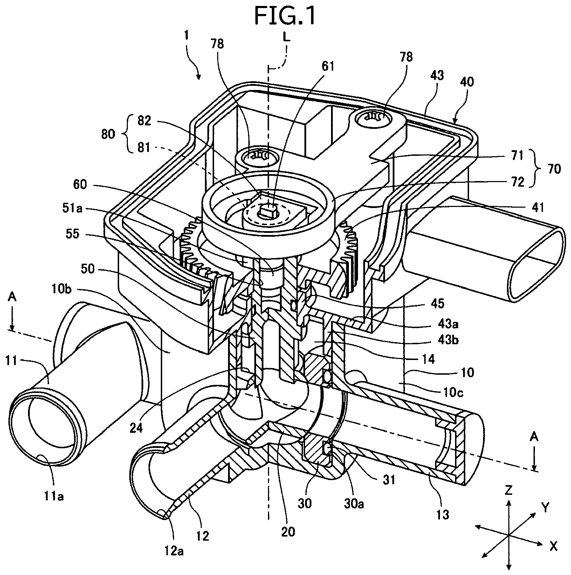

A flow channel switching valve according to an embodiment of the present invention will now be described with reference to Fig. 1 to Figs. 5.

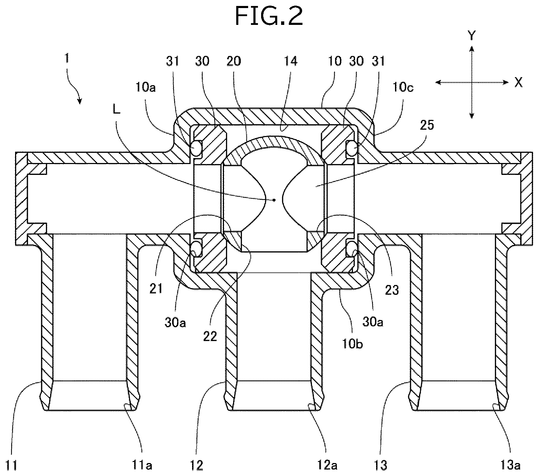

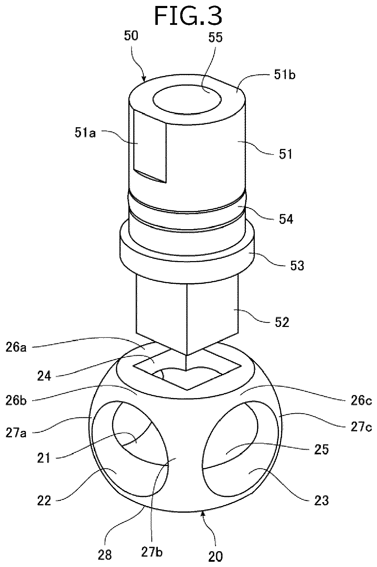

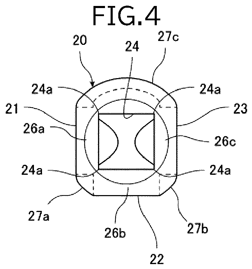

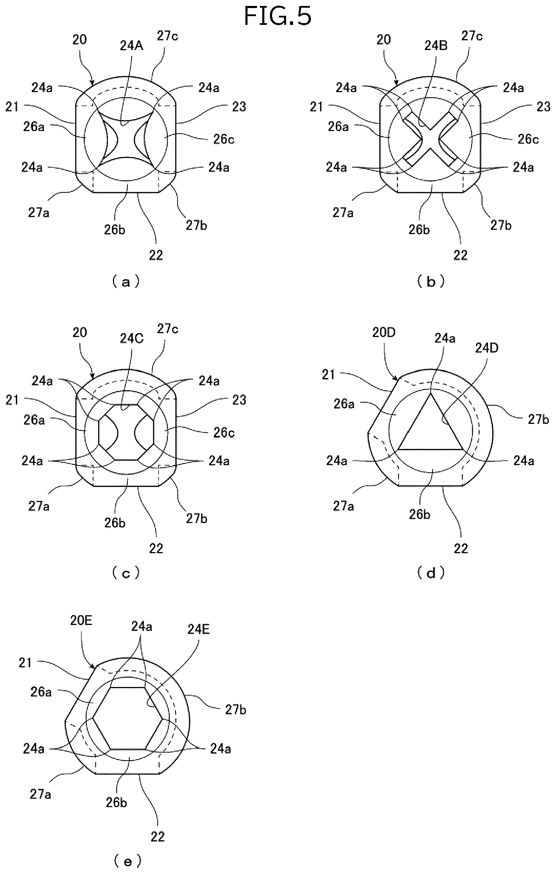

Fig. 1 is a perspective view containing a cross-section of the flow channel switching valve according to the embodiment of the present invention. Fig. 2 is a cross-sectional view taken along line A-A in Fig. 1. Fig. 3 is a perspective view of a ball valve member and a valve shaft of the flow channel switching valve in Fig. 1. Fig. 4 is a plan view of the ball valve member that the flow channel switching valve according to the present embodiment includes. Figs. 5(a) to 5(e) are plan views illustrating modifications of the ball valve member. In the following description, the terms "upper, lower, left, and right" are used to represent relative positional relationships of components in the figures and do not represent absolute positional relationships. In the figures, an X-axis direction represents a left-and-right direction, a Y-axis direction represents a front-and-rear direction (a front-back direction), and a Z-axis direction represents an up- and-down direction. An X-axis, a Y-axis, a Z-axis are perpendicular to each other. A direction along a rotational axis of the valve member (a direction of a rotational axis) represents a vertical direction, and a direction perpendicular to the rotational axis represents a transverse direction.

As illustrated in Fig. 1 and Fig. 2, a flow channel switching valve 1 according to the present embodiment includes a valve body 10, a ball valve member 20, seat members 30, sealing members 31, a driving section 40, and a valve shaft 50. The flow channel switching valve 1 further includes a potentiometer shaft 60 corresponding to a rotational angle output shaft, a potentiometer base 70 corresponding to a base body, and a potentiometer 80 corresponding to a rotational angle detection portion.

The valve body 10 is composed of synthetic resin and has a substantially cubic box shape. A first flow channel 11 that has a substantially L-shape is formed on a left side wall portion 10a of the valve body 10. A second flow channel 12 that is linear is formed on a front wall portion 10b of the valve body 10. A third flow channel 13 that is plane-symmetrical with the first flow channel 11 and that has a substantially L-shape is formed on a right side wall portion 10c of the valve body 10. An opening 11a of the first flow channel 11, an opening 12a of the second flow channel 12, and an opening 13a of the third flow channel 13 are directed in the same direction (the front direction). The first flow channel 11, the second flow channel 12, and the third flow channel 13 are in communication with a valve chamber 14 that is formed in the valve body 10. Two flow channels or four or more flow channels in communication with the valve chamber 14 may be formed.

The ball valve member 20 is composed of a synthetic resin and has a hollow ball-like shape (a spherical shape). The ball valve member 20 is rotatably supported by the seat members 30 described later and is installed in the valve chamber 14. The ball valve member 20 has a first opening 21 that is a transverse hole opened toward the left-hand direction, a second opening 22 that is a transverse hole opened toward the front direction, and a third opening 23 that is a transverse hole opened toward the right-hand direction when the ball valve member 20 is located at a rotational position illustrated in Fig. 2. A switching flow channel 25 is formed in the ball valve member 20. The switching flow channel 25 has a substantially T-shape in a plan view and that connects the first opening 21, the second opening 22, and the third opening 23 to each other. In other words, the first opening 21, the second opening 22, and the third opening 23 are connected to the switching flow channel 25. For example, the ball valve member 20 may have only the first opening 21 and the second opening 22. The ball valve member 20 may have the switching flow channel 25 that has a substantially L-shape in a plan view and that connects the first opening 21 and the second opening 22 to each other when the ball valve member 20 is located at the rotational position illustrated in Fig. 2. In the present embodiment, the ball valve member 20 is used as the valve member, but a non claimed columnar valve member may be used.

The switching flow channel 25 switches between the connections among the first flow channel 11, the second flow channel 12, and the third flow channel 13 depending on the rotational position of the ball valve member 20. Specifically, the switching flow channel 25 connects the first flow channel 11, the second flow channel 12, and the third flow channel 13 to each other when the ball valve member 20 is located at the rotational position illustrated in Fig. 2. The switching flow channel 25 connects the first flow channel 11 and the second flow channel 12 to each other when the ball valve member 20 is located at the rotational position at which the ball valve member 20 is rotated 90 degrees clockwise in a plan view from the rotational position illustrated in Fig. 2. The switching flow channel 25 connects the second flow channel 12 and the third flow channel 13 to each other when the ball valve member 20 is located at the rotational position at which the ball valve member 20 is rotated 90 degrees counterclockwise in a plan view from the rotational position illustrated in Fig. 2.

A valve shaft insertion hole 24 is formed in an upper portion of the ball valve member 20. A valve shaft insertion hole 24 is a vertical hole in which the valve shaft 50 described later is inserted. The valve shaft insertion hole 24 is in communication with the switching flow channel 25. The valve shaft insertion hole 24 is inserted the valve shaft 50 therein. The valve shaft insertion hole 24 is formed such that rotation of the valve shaft 50 makes the ball valve 20 rotating about an axis L corresponding to a rotational axis. Specifically, the valve shaft insertion hole 24 has the same shape as a cross-sectional shape (a transverse cross-sectional shape) in the direction perpendicular to the axial direction of the prism portion 52 of the valve shaft 50. In the present embodiment, when viewed in the direction along the axis L (the direction of the rotational axis), the valve shaft insertion hole 24 has a square shape as illustrated in Fig. 4.

The valve shaft insertion hole 24 has a square shape and has four outward convex corner portions 24a. Each of the four corner portions 24a is shifted from a beam part 26a between the first opening 21 and the valve shaft insertion hole 24, a beam part 26b between the second opening 22 and the valve shaft insertion hole 24, and a beam part 26c between the third opening 23 and the valve shaft insertion hole 24. In other words, each of the four corner portions 24a of the valve shaft insertion hole 24 is disposed facing a peripheral wall part 27a between the first opening 21 and the second opening 22, a peripheral wall part 27b between the second opening 22 and the third opening 23, or a peripheral wall part 27c between the third opening 23 and the first opening 21. The valve shaft insertion hole 24 faces a bottom wall part 28 corresponding to a lower wall part of the ball valve member 20, in the direction along the axis L.

Figs. 5(a) to 5(c) illustrate the modifications that can be employed in place of the valve shaft insertion hole 24. Fig. 5(a) (not forming part of the claimed invention) illustrates a valve shaft insertion hole 24A formed by curving each side of a square shape inward. Fig. 5(b) (not forming part of the claimed invention) illustrates a valve shaft insertion hole 24B having a cross shape. Fig. 5(c) illustrates a valve shaft insertion hole 24C having an octagonal shape. In the valve shaft insertion holes 24A, 24B, and 24C, each of the corner portions 24a is also shifted from the beam parts 26a, 26b, and 26c as the valve shaft insertion hole 24 in the present embodiment. That is, each of the corner portions 24a is disposed facing the peripheral wall parts 27a, 27b, or 27c.

In addition, Figs. 5(d) and 5(e) illustrate ball valve members 20D and 20E that have the first opening 21 and the second opening 22. The first opening 21 and the second opening 22 are two transverse holes and are formed about the axis L. Fig. 5(d) illustrates the modification with a valve shaft insertion hole 24D having a triangular shape. Fig. 5(e) illustrates the modification with a valve shaft insertion hole 24E having a hexagonal shape. In the valve shaft insertion holes 24D and 24E, each of the corner portions 24a is also shifted from the beam parts 26a and 26b as the valve shaft insertion hole 24 in the present embodiment. That is, each of the corner portions 24a is disposed facing the peripheral wall parts 27a or 27b. In the structure employing the ball valve members 20D and 20E, each of the flow channels of the valve body 10 is disposed to correspond to the first opening 21 and the second opening 22 illustrated in Figs 5(d) and 5(e). The dashed lines in Figs. 4 and 5(a) to 5(e) show the cross-sectional shapes of the flow channels including the transverse holes in each of the valve members.

In any of ball valve members illustrated in Figs 5, each of the corner portions 24a of the valve shaft insertion hole is also shifted from the beam parts 26a, 26b, and 26c between the transverse holes and the vertical hole (the valve shaft insertion hole). That is, each of the corner portions 24a is disposed facing the peripheral wall parts 27a, 27b, or 27c. In the ball valve member having the valve shaft insertion hole with a polygonal shape such as a triangular shape, a quadrangular shape, a hexagonal shape, or an octagonal shape, when viewed in the direction along the axis L (the direction of the rotational axis), a center line (an axis) of the transverse hole is perpendicular to a side portion of the polygonal shape in the valve shaft insertion hole. In the present embodiment, when viewed in the direction along the axis L, each of the center lines of the first opening 21, the second opening 22, and the third opening 23 is perpendicular to the side portion of the quadrangular shape in the valve shaft insertion hole 24. The first opening 21, the second opening 22, and the third opening 23 are the transverse holes.

The seat members 30 are composed of, for example, synthetic resin such as polytetrafluoroethylene (PTFE) and have an annular shape. The seat members 30 are paired with each other and are installed in the valve chamber 14 so as to face each other in an interval in the X-axis direction. The seat members 30 that the ball valve member 20 is disposed therebetween rotatably support the ball valve member 20 in the valve chamber 14.

The sealing members 31 are, for example, O-rings composed of an elastic material such as a rubber material, one of which is disposed between one of the seat members 30 and the left side wall portion 10a of the valve body 10 in a compressed state, and the other of which is disposed between the other seat member 30 and the right side wall portion 10c of the valve body 10 in the compressed state. In the present embodiment, the sealing members 31 are fitted in annular grooves 30a that the seat members 30 have and partly project from the annular grooves 30a. The sealing members 31 seal a space between the valve body 10 and the ball valve member 20 together with the seat members 30. The flow channel switching valve may have a structure omitting the sealing members 31 and employing seat members 30 that are composed of an elastic material such as a rubber material and that have the function of the sealing members instead.

The driving section 40 includes a driving mechanism, a lower case 43, and an upper case that is not illustrated. The driving mechanism includes a combination of a motor, not illustrated, and a speed reducer that includes a gear 41. The lower case 43 is composed of resin and in which the driving mechanism is installed. The upper case is mounted on the lower case 43 by a screw fastening structure, a snap-fit structure, or other mounting structure. The driving section 40 rotates the ball valve member 20 about the axis L via the valve shaft 50 described later.

The lower case 43 includes a cylindrical bearing portion 45 that is integrated with the center of a bottom wall 43a. The valve shaft 50 is disposed in the bearing portion 45, and the bearing portion 45 rotatably supports the valve shaft 50. An inner peripheral wall portion 43b has a substantially square tube shape and is formed at the bottom wall 43a of the lower case 43. The inner peripheral wall portion 43b is combined with an upper end portion of the valve body 10 and is joined to each other (by ultrasonic welding in the present embodiment). The lower case 43 and the valve body 10 may be assembled to each other, for example, in a screw fastening structure.

The valve shaft 50 is composed of synthetic resin, has a columnar shape that linearly extends overall, and includes a round columnar portion 51 and a prism portion 52. The prism portion 52 is coaxially connected to the lower end of the round columnar portion 51. The valve shaft 50 extends along the axis L.

The round columnar portion 51 has a stopper portion 53 on its lower end portion. The stopper portion 53 has an annular shape and extends outward in the radial direction. The outer diameter of the stopper portion 53 is larger than the inner diameter of the bearing portion 45.

In addition, a groove is formed on the lower end portion of the round columnar portion 51 over the entire circumference. The groove is disposed at a position above the stopper portion 53. An O-ring 54 is composed of, for example, a rubber material and has an annular shape. The O-ring 54 is fitted in the groove. The round columnar portion 51 is disposed in the bearing portion 45 and is rotatably supported by the bearing portion 45. The outer diameter of the round columnar portion 51 is slightly smaller than the inner diameter of the bearing portion 45, and the O-ring 54 seals a gap between the valve shaft 50 and the bearing portion 45 when the round columnar portion 51 is inserted in the bearing portion 45. This prevents a fluid in the valve chamber 14 from leaking to its outside.

The gear 41 that the driving mechanism of the driving section 40 includes is mounted on an upper end portion of the round columnar portion 51 by press-fitting. A planar surface 51a that inhibits the press-fitted gear 41 from slipping is disposed on the upper end portion of the round columnar portion 51. The gear 41 may be mounted on the valve shaft 50 by a method other than press-fitting.

The prism portion 52 has a columnar shape of which the transverse cross-sectional shape is a square shape. The prism portion 52 is inserted in the valve shaft insertion hole 24 of the ball valve member 20 and is consequently mounted in the ball valve member 20 along the axis L. As a result, the axis L of the ball valve member 20 serves as the rotational axis of the valve shaft 50. Rotation of the gear 41 makes the valve shaft 50 rotating about the axis L. The valve shaft insertion hole 24 has the same square shape as the transverse cross-sectional shape of the prism portion 52. For this reason, the valve shaft insertion hole 24 and the prism portion 52 fit together, and rotation of the valve shaft 50 makes the ball valve member 20 rotating about the axis L. The outer diameter of the prism portion 52 is smaller than the outer diameter of the stopper portion 53.

A mounting hole 55 that has a substantially round columnar shape along the axis L is formed at the center of an end surface 51b of the round columnar portion 51 that faces upward. A potentiometer shaft 60 described later is press-fitted in the mounting hole 55.

The potentiometer shaft 60 is composed of, for example, metal such as stainless steel or brass, or synthetic resin such as polyphenylene sulfide (PPS). The potentiometer shaft 60 is formed separately from the valve shaft 50. The potentiometer shaft 60 is press-fitted in the mounting hole 55 of the valve shaft 50 and is coaxially secured to and mounted in the valve shaft 50. The potentiometer shaft 60 has a fitting shaft portion 61 with D-shape in its upper end. The fitting shaft portion 61 is fitted a rotor 81 of the potentiometer 80 described later.

The potentiometer base 70 is composed of synthetic resin and includes a base main body portion 71 and a meter mounting portion 72, integrally formed with each other. The base main body portion 71 has a substantially flat plate shape and is secured to a boss (not illustrated) that protrudes upward from the bottom wall 43a of the lower case 43 by using screws 78. The meter mounting portion 72 has a substantially disk shape and the potentiometer 80 described later is mounted in the center of the meter mounting portion 72.

The potentiometer 80 is a rotational angle sensor for detecting a rotational angle. The potentiometer 80 includes the rotor 81 that has a disk shape and a meter main body portion 82 corresponding to a signal output portion that rotatably supports the rotor 81 and that outputs a signal (voltage) depending on the rotational angle of the rotor 81. A fitting hole that has a D-shape in a plan view is formed at the center of the rotor 81. The fitting shaft portion 61 of the potentiometer shaft 60 extends through the fitting hole and is fitted in the fitting hole. Rotation of the fitting shaft portion 61 makes the rotor 81 rotating. Consequently, the potentiometer 80 detects the rotational angle of the potentiometer shaft 60 (that is, the valve shaft 50 and the ball valve member 20) about the axis L.

In the flow channel switching valve 1, the rotation of the motor of the driving section 40 is transmitted to the valve shaft 50 via the gear 41, and the valve shaft 50 is rotated about the axis L. Rotation of the valve shaft 50 makes the ball valve member 20 rotating about the axis L and locating at each rotational position. This achieves connections of the flow channels depending on the rotational position of the ball valve member 20. The potentiometer shaft 60 is rotated about the axis L together with the valve shaft 50, and the potentiometer 80 outputs the signal depending on the rotational angle of the potentiometer shaft 60. The rotational position of the ball valve member 20 can be monitored based on the signal that is outputted from the potentiometer 80.

In the flow channel switching valve 1 according to the present embodiment described above, the ball valve member 20 in which the valve shaft 50 is mounted has the first opening 21, the second opening 22, the third opening 23, and the valve shaft insertion hole 24. The first opening 21, the second opening 22, and the third opening 23 are the transverse holes in communication with the switching flow channel 25 formed in the ball valve member 20. The valve shaft insertion hole 24 is the vertical hole in which the valve shaft 50 is inserted. The valve shaft insertion hole 24 has the outward convex corner portions 24a, and the corner portions 24a are shifted from the beam part 26a between the first opening 21 and the valve shaft insertion hole 24, the beam part 26b between the second opening 22 and the valve shaft insertion hole 24, and the beam part 26c between the third opening 23 and the valve shaft insertion hole 24. In this way, it is possible to avoid the beam parts 26a, 26b, and 26c of the valve member 20 having a thinner shape and effectively suppress decreasing the rigidity of the beam parts 26a, 26b, and 26c of the valve member 20. Due to the valve shaft insertion hole 24 has a quadrangular shape, the valve member 20 has a relatively simple structure and can be easily manufactured.

The ball valve member 20 is molded by injecting molten resin into a cavity of a mold (that is, resin molding). In the mold, a gate (a resin inlet) for injecting resin into the cavity is formed at a point corresponding to the outer surface of the bottom wall part 28 facing the valve shaft insertion hole 24 that is a vertical hole. In particular, the gate is preferably formed at or near the area where the axis line L passes through on the outer surface of the bottom wall part 28. As a result, an unevenness (a gate mark), which is a trace of the gate, is formed only on the outer surface of the bottom wall part 28. It is possible to avoid gate mark formation on the beam parts 26a, 26b, and 26c and peripheral wall parts 27a, 27b, and 27c on the outer surface of the ball valve member 20, which are in contact with the seat members 30. This prevents the gate mark from coming into contact with the seat members 30, thereby improving sealing performance and allowing the ball valve member 20 to slide smoothly.

The embodiment of the present invention is described above. However, the embodiment is one example, and the present invention is not limited to the embodiment. An embodiment obtained by appropriately adding, removing, or modifying components according to the embodiment described above by a person skilled in the art, and an embodiment obtained by appropriately combining features of the embodiment are included in the scope of the present invention without departing from the scope of the present invention as defined by the appended claims.

1 ··· flow channel switching valve, 10 ··· valve body, 10a ... left side wall portion, 10b ··· front wall portion, 10c ··· right side wall portion, 11 ··· first flow channel, 12 ... second flow channel, 13 ··· third flow channel, 11a, 12a, 13a ··· opening, 14 ··· valve chamber, 20 ··· ball valve member, 21 ··· first opening, 22 ··· second opening, 23 ··· third opening, 24 ··· valve shaft insertion hole, 25 ··· switching flow channel, 26a, 26b, 26c ··· beam part, 27a, 27b, 27c ··· peripheral wall part, 30 ··· seat member, 30a ··· annular groove, 31 ··· sealing member, 40 ··· driving section, 41 ··· gear, 43 ··· lower case, 43a ··· bottom wall, 43b ··· inner peripheral wall portion, 45 ... bearing portion, 50 ··· valve shaft, 51 ··· round columnar portion, 51a ··· planar surface, 51b ··· end surface, 52 ··· prism portion, 53 ··· stopper portion, 54 ··· O-ring, 55 ··· mounting hole, 60 ··· potentiometer shaft, 61 ··· fitting shaft portion, 70 ··· potentiometer base, 71 ··· base main body portion, 72 ··· meter mounting portion, 80 ··· potentiometer, 81 ··· rotor, 82 ··· meter main body portion

## Claims

1. A flow channel switching valve comprising:
a valve body (10) that has a valve chamber (14) and flow channels in communication with the valve chamber;
a valve member (20) that is rotatably installed in the valve chamber (14) and that switches between connections of the flow channels depending on a rotational position of the valve member;
a valve shaft (50) that is mounted in the valve member (20) along a rotational axis of the valve member; and
a driving section that rotates the valve member via the valve shaft,
wherein the valve member (20) has two or three transverse holes (21, 22, 23) in communication with a switching flow channel formed in the valve member, and a vertical hole (24) in which the valve shaft (50) is inserted. transverse holes (21, 22, 23) and peripheral wall parts in between the wherein the vertical hole (24) has a polygonal shape,
wherein when viewed in the direction of the rotational axis, the vertical hole (24) has multiple outward convex corner portions, and each corner portion is disposed facing a peripheral wall part,
wherein the vertical hole (24)
is in communication with the switching flow channel,
wherein when viewed in the direction of the rotational axis, each transverse hole (21, 22, 23) is formed
such that a center line of the transverse hole (21, 22, 23) is perpendicular to a side portion of the (21, 22, 23) polygonal shape corresponding to a beam part between the transverse hole and the vertical hole next to the transverse hole, and
wherein the valve member is resin-molded in a spherical shape **characterised in that** the valve member (20) has a gate mark only on an outer surface of a wall portion that faces the vertical hole.

2. The flow channel switching valve according to Claim 1, wherein the vertical hole (24) has a polygonal shape with corner portions in multiples of three or four.

3. The flow channel switching valve according to Claim 2, wherein the vertical hole (24) has a quadrangular shape.

4. The flow channel switching valve according to Claim 2, wherein the vertical hole (24) has a triangular shape.

## Patentansprüche

1. Ein Strömungskanal-Umschaltventil, umfassend:
einen Ventilkörper (10), der eine Ventilkammer (14) und Strömungskanäle, die in Verbindung mit der Ventilkammer sind, hat;
ein Ventilelement (20), das drehbar in der Ventilkammer (14) installiert ist und zwischen Verbindungen der Strömungskanäle abhängig von einer Drehposition des Ventilelements (20) umschaltet;
eine Ventilwelle (50), die im Ventilelement (20) entlang einer Drehachse des Ventilelements (20) angeordnet ist; und
einen Antriebsabschnitt, der das Ventilelement über die Ventilwelle dreht,
wobei das Ventilelement (20) zwei oder drei Querlöcher (21, 22, 23), die in Verbindung mit einem Umschaltströmungskanal im Ventilelement stehen, und ein vertikales Loch (24) umfasst, in das die Ventilwelle (50) eingesetzt ist,
und Umfangswandabschnitte zwischen den Querlöchern (21, 22, 23),
wobei das vertikale Loch (24) eine polygonale Form hat,
wobei, in Richtung der Drehachse betrachtet, das vertikale Loch (24) mehrere nach außen konvexe Eckabschnitte hat, wobei jeder Eckabschnitt einem Umfangswandabschnitt zugewandt ist,
und wobei das vertikale Loch (24) in Verbindung mit dem Umschaltströmungskanal (25) steht,
wobei, in Richtung der Drehachse betrachtet, jedes Querloch (21, 22, 23) derart geformt ist, dass eine Mittellinie des Querlochs (21, 22, 23) senkrecht zu einem Seitenabschnitt der polygonalen Form, die einem Trägerteil zwischen dem Querloch (21, 22, 23) und dem vertikalen Loch neben dem Querloch entspricht, steht und
wobei das Ventilelement (50) kugelförmig aus Harz gegossen ist,
**dadurch gekennzeichnet, dass** das Ventilelement (20) eine Angussstelle nur auf einer äußeren Oberfläche eines Wandteils hat, das dem vertikalen Loch zugewandt ist.

2. Strömungskanal-Umschaltventil nach Anspruch 1, wobei das vertikale Loch (24) eine polygonale Form mit Eckabschnitten in Vielfachen von drei oder vier hat.

3. Strömungskanal-Umschaltventil nach Anspruch 2, wobei das vertikale Loch (24) eine viereckige Form hat.

4. Strömungskanal-Umschaltventil nach Anspruch 2, wobei das vertikale Loch (24) eine dreieckige Form hat.

## Revendications

1. Soupape de commutation de canal d'écoulement comportant :
un corps de soupape (10) qui a une chambre de soupape (14) et des canaux d'écoulement en communication avec la chambre de soupape ;
un élément de soupape (20) qui est installé de façon à pouvoir tourner dans la chambre de soupape (14) et qui commute entre des raccordements des canaux d'écoulement en fonction d'une position de rotation de l'élément de soupape ;
une tige de soupape (50) qui est montée dans l'élément de soupape (20) le long d'un axe de rotation de l'élément de soupape ; et
une section d'entraînement qui fait tourner l'élément de soupape via la tige de soupape,
dans laquelle l'élément de soupape (20) a deux ou trois trous transversaux (21, 22, 23) en communication avec un canal d'écoulement de commutation formé dans l'élément de soupape, et un trou vertical (24) dans lequel la tige de soupape (50) est insérée, et des parties de paroi périphérique entre les trous transversaux (21, 22, 23),
dans laquelle le trou vertical (24) a une forme polygonale,
dans laquelle lorsqu'il est vu dans la direction de l'axe de rotation, le trou vertical (24) a de multiples portions de coin convexes vers l'extérieur, et chaque portion de coin est disposée en face d'une partie de paroi périphérique,
dans laquelle le trou vertical (24) est en communication avec le canal d'écoulement de commutation,
dans laquelle lorsqu'il est vu dans la direction de l'axe de rotation, chaque trou transversal (21, 22, 23) est formé de telle sorte qu'une ligne centrale du trou transversal (21, 22, 23) est perpendiculaire à une portion latérale de la forme polygonale correspondant à une partie de poutre entre le trou transversal (21, 22, 23) et le trou vertical à côté du trou transversal, et dans laquelle l'élément de soupape est moulé en résine selon une forme sphérique, **caractérisée en ce que** l'élément de soupape (20) a une trace de carotte uniquement sur une surface extérieure d'une portion de paroi qui est dirigée vers le trou vertical.

2. Soupape de commutation de canal d'écoulement selon la revendication 1, dans laquelle le trou vertical (24) a une forme polygonale avec des portions de coin par multiples de trois ou de quatre.

3. Soupape de commutation de canal d'écoulement selon la revendication 2, dans laquelle le trou vertical (24) a une forme quadrangulaire.

4. Soupape de commutation de canal d'écoulement selon la revendication 2, dans laquelle le trou vertical (24) a une forme triangulaire.
